# EUROPEAN PATENT APPLICATION

(11) **EP 3 748 999 A1**
(43) Date of publication of application: **09.12.2020**
(21) Application number: 19764965.0
(22) Date of filing: 28.02.2019
(51) Int. Cl.: H04W 4/80, H04L 1/00, H04W 28/02

(54) **TRANSMISSION RATE SWITCHING METHOD, BLUETOOTH DEVICE, AND COMPUTER-READABLE MEDIUM**

(30) Priority: 08.03.2018 CN 201810190068
(71) Applicant: HUAWEI TECHNOLOGIES CO., LTD., Shenzhen, Guangdong 518129 (CN)
(72) Inventor: LIU, Huazhang, Shenzhen, Guangdong 518129 (CN)
(74) Representative: Goddar, Heinz J.
(86) International application number: PCT/CN2019/076505
(87) International publication number: WO 2019/170029

(57) **Abstract**

Embodiments of the present invention disclose a transmission rate switching method, a Bluetooth device, and a computer-readable medium. The method is applied to a first device that communicates with a second device through a Bluetooth physical channel. The method includes: determining, by the first device, link quality of the Bluetooth physical channel; determining, by the first device based on a preset correspondence between link quality and a transmission rate, target transmission rates corresponding to the link quality, where the target transmission rates include a first sending rate and a second sending rate; setting, by the first device, a rate of sending information to the second device through the Bluetooth physical channel to the first sending rate; and sending, by the first device, first control information to the second device, to indicate the second device to set a rate of sending information to the first device through the Bluetooth physical channel to the second sending rate. This can quickly complete transmission rate switching, and reduce signaling overheads.

## Description

### TECHNICAL FIELD

The present invention relates to the communications field, and in particular, to a transmission rate switching method, a Bluetooth device, and a computer-readable medium.

### BACKGROUND

Bluetooth is a radio technology that supports short-distance communication between devices, and can be used to exchange wireless information between a plurality of devices such as mobile phones, wireless headsets, notebook computers, and related peripherals. With rapid development of mobile communications technologies, portable devices such as a mobile phone and a tablet computer become necessary in daily life of people, and a Bluetooth technology comes standard with these portable devices. With evolution of the Bluetooth technology, a major Bluetooth standard version has evolved from version 1.1 to current version 5.0. In the latest version 5.0, Bluetooth low energy (Bluetooth Low Energy, BLE) can support three physical rates: BLE 1M, BLE 2M, and a BLE long range. It can be predicted that, with release of the Bluetooth standard 5.0, more audio functions may be implemented by using the BLE technology. Therefore, a Bluetooth chip can support music playback and calling without depending on conventional Bluetooth, so that costs of audio support by the Bluetooth can be reduced. However, it is considered that a network status may change during music playback or calling. If a high-speed physical channel is always used, a retransmission rate and a packet error ratio are high, and consequently continuous frame freezing occurs during audio playback or calling. To resolve this problem, an ideal case is that a Bluetooth module notifies a Bluetooth host to pause audio or a call, and performs physical channel configuration on a controller side to select a physical channel with a smaller physical bandwidth and a stronger anti-interference capability for data transmission. In addition, after interference decreases or disappears, the physical channel needs to be switched back to a high-speed mode as soon as possible.

For how to implement switching between different physical rates, a physical rate updating procedure is formulated at a link control layer in Bluetooth specifications. A main feature of this procedure is that switching of a physical rate of a current link is implemented through interaction between three link control messages. To be specific, in the current Bluetooth specifications, a physical rate needs to be updated by performing message receiving and sending on an air interface three times. In this way, two communication parties can complete physical layer channel information transmission and acknowledgment only after consuming at least three BLE connection intervals. According to BLE specifications, a shortest BLE connection interval is 7.5 milliseconds. In this case, it approximately takes at least 22.5 milliseconds to complete physical layer channel message transmission and acknowledgment. In addition, the BLE specifications specify that a channel switching time point takes effect after at least six connection intervals after rate update control information is sent or received. In this way, at least nine BLE connection intervals are required from initiation of physical rate switching to completion of the physical rate switching. To be specific, approximately at least 75 milliseconds are required to complete the physical rate switching.

Therefore, in a currently used technical solution, it takes a long time to perform physical rate switching, and consequently a requirement for fast physical rate switching cannot be met in a specific scenario such as an audio playback scenario or a calling scenario.

### SUMMARY

Embodiments of the present invention provide a transmission rate switching method, a Bluetooth device, and a computer-readable medium, so as to improve a procedure in which a Bluetooth device switches a transmission rate, and improve switching efficiency.

According to a first aspect, an embodiment of the present invention provides a transmission rate switching method, where the method is applied to a first device that communicates with a second device through a Bluetooth physical channel, and the method includes:
determining, by the first device, link quality of the Bluetooth physical channel;
determining, by the first device based on a preset correspondence between link quality and a transmission rate, target transmission rates corresponding to the link quality, where the target transmission rates include a first sending rate and a second sending rate;
setting, by the first device, a rate of sending information to the second device through the Bluetooth physical channel to the first sending rate; and
sending, by the first device, first control information to the second device, to indicate the second device to set a rate of sending information to the first device through the Bluetooth physical channel to the second sending rate.

Both the first device and the second device are Bluetooth devices. The Bluetooth device is a device that can perform communication by using a Bluetooth technology, that is, a device having a Bluetooth communication function. Either of the first device and the second device is a primary device, and the other is a secondary device. The first device may be a secondary device, or may be a primary device. The Bluetooth technology specifies that Bluetooth communication can be performed between each pair of Bluetooth devices only when one Bluetooth device is a primary device and the other Bluetooth device is a secondary device. During communication, the primary device performs searching and initiates pairing. After a link is successfully established, the two parties may receive and send data. In other words, the primary device is a Bluetooth device that actively initiates communication, and the secondary device is a device selected by the primary device for communication.

In this application, there is at least one physical link between the first device and the second device. The Bluetooth physical channel is any physical link or physical transmission channel between the first device and the second device. The link quality is quality of a physical link with a to-be-adjusted transmission rate between the first device and the second device. The target transmission rates are transmission rates of transmitting data through the Bluetooth physical channel. Specifically, the first device detects quality of the Bluetooth physical channel to obtain the link quality. It can be understood that the target transmission rates are transmission rates that can be supported by the link quality. Optionally, the target transmission rates are relatively large transmission rates in transmission rates that can be supported by the link quality.

In this application, the target transmission rates corresponding to the link quality of the Bluetooth physical channel are determined based on the preset correspondence between link quality and a transmission rate, and the control information is used to indicate the second device to set the sending rate and set the sending rate of the first device. A switching procedure is simple, so that message sequence overheads can be reduced.

In an optional implementation, the determining, by the first device based on a preset correspondence between link quality and a transmission rate, target transmission rates corresponding to the link quality includes:
after determining that a variation of the link quality of the Bluetooth physical channel within reference duration exceeds a quality threshold, determining, by the first device based on the correspondence between link quality and a transmission rate, the target transmission rates corresponding to the link quality.

It can be understood that, that the variation of the link quality within the reference duration exceeds the quality threshold is a condition that needs to be met for transmission rate switching. To be specific, if the variation of the link quality within the reference duration exceeds the quality threshold, transmission rate switching is performed; or if the variation of the link quality within the reference duration does not exceed the quality threshold, transmission rate switching is not performed. The reference duration is duration that is preset by the first device, for example, 100 milliseconds, 500 milliseconds, or 2 seconds.

In an optional implementation, the first control information includes a first field, a second field, and a third field, the first field indicates the first sending rate, the second field indicates the second sending rate, the third field indicates a target time point, and the setting, by the first device, a rate of sending information to the second device through the Bluetooth physical channel to the first sending rate includes:
after the target time point is reached, setting, by the first device, the rate of sending information to the second device through the Bluetooth physical channel to the first sending rate.

It can be understood that the target time point is a transmission rate switching time point. Both the first device and the second device switch transmission rates to the target transmission rates at the target time point. In this manner, a time interval between a time point at which the first device completes transmission rate switching and a time point at which the second device completes transmission rate switching is relatively short. Therefore, it can be ensured that a data receiving and sending rate of the first device is consistent with a data receiving and sending rate of the second device.

In an optional implementation, the third field includes target duration, and after the sending, by the first device, first control information to the second device, the method further includes:
starting timing after receiving acknowledgment information from the second device, where the acknowledgment information indicates that the second device receives the first control information.

That the target time point is reached includes:
duration of the timing reaches the target duration.

In an optional implementation, after the starting timing after receiving acknowledgment information from the second device, the method further includes:
stopping timing when rejection information is received before the target time point is reached, where the rejection information indicates that the second device rejects the first control information.

When the second device rejects the first control information, the first device stops timing, to be specific, stops an operation of switching a current transmission rate switching. It can be understood that, after stopping timing, the first device cannot meet a condition in which the target time point is reached, and therefore does not need to perform a transmission rate switching operation. If the second device rejects the first control information, the first device may generate another piece of control information. The control information indicates to perform transmission rate switching by the first device and the second device to another transmission rate, and the transmission rate is different from the target transmission rate. This manner can avoid a problem that quality of transmission between the first device and the second device is relatively poor after the second device switches to the target transmission rate.

In an optional implementation, the first control information further includes a fourth field and/or a fifth field, the fourth field indicates a link corresponding to the link quality, and the fifth field indicates an available channel between the first device and the second device.

The first control information may further include information such as a link identifier, an available channel, and an encoding scheme.

In an optional implementation, the first device is a primary device, the second device is a secondary device, and the method further includes:
receiving second control information sent by the second device, where the second control information indicates the first device to switch a sending rate; and
rejecting the second control information when a time interval between a first time point and a second time point is less than a time threshold, where the first time point is a time point at which the first device sends the first control information, and the second time point is a time point at which the first device receives the second control information.

In this application, both the primary device and the secondary device can send control information. When a time interval between a time point at which the primary device sends the control information and a time point at which the secondary device sends the control information is less than the time threshold, the control information sent by the secondary device is rejected, and the control information sent by the primary device is executed. In this manner, the primary device and the secondary device can be prevented from performing two transmission rate switching operations within a same time period.

According to a second aspect, an embodiment of the present invention provides another transmission rate switching method, where the method is applied to a second device that communicates with a first device through a Bluetooth physical channel, and the method includes:
receiving, by the second device, control information sent by the first device; and
switching, by the second device, from a current sending rate to a sending rate that is of the second device and that is indicated by the control information, where the sending rate that is of the second device and that is indicated by the control information is a sending rate that corresponds to link quality of the Bluetooth physical channel and that is determined by the first device based on a preset correspondence between link quality and a transmission rate.

Both the first device and the second device are Bluetooth devices. Either of the first device and the second device is a primary device, and the other is a secondary device. The first device may be a secondary device, or may be a primary device. The second device may switch the transmission rate based on the control information sent by the first device. Specifically, the second device may switch the transmission rate to the transmission rate indicated by the control information. It can be understood that the transmission rate of the second device may be quickly switched based on the link quality, and quality of transmission between the first device and the second device is ensured.

In an optional implementation, after the receiving, by the second device, control information sent by the first device, the method includes:
sending rejection information to the first device when determining to reject the control information, where the rejection information indicates that the second device rejects the control information.

Optionally, when at least one of sending rates and receiving rates of the second device that can be supported by the link quality is greater than a requirement of the target transmission rate, or when at least one of sending rates and receiving rates of the second device that can be supported by the link quality cannot meet a requirement of the target transmission rate, the second device determines to reject the control information. It can be understood that, if receiving and sending performance of the second device cannot be fully used when the second device switches the transmission rate to the target transmission rate, the second device determines to reject the control information. If the second device cannot reach a receiving rate or a sending rate required by the target transmission rate, the second device determines to reject the control information. In this way, quality of transmission between the first device and the second device can be ensured, and the receiving and sending performance of the second device can be fully used. The receiving and sending performance means data receiving performance and data sending performance, which correspond to a receiving rate and a sending rate.

In an optional implementation, after the receiving, by the second device, control information sent by the first device, the method further includes:
sending acknowledgment information to the first device, where the acknowledgment information indicates that the second device receives the control information.

In an optional implementation, the control information includes a first field, a second field, and a third field, the first field indicates a to-be-used sending rate of the first device, the second field indicates a to-be-used sending rate of the second device, and the third field indicates a target time point.

The switching, by the second device, from a current sending rate to a sending rate that is of the second device and that is indicated by the control information includes:
after the target time point is reached, switching, by the second device, from the current sending rate to the sending rate indicated by the second field.

In an optional implementation, the third field includes target duration, and after the sending acknowledgment information to the first device, the method further includes:
starting timing.

That the target time point is reached includes:
duration of the timing reaches the target duration.

In an optional implementation, after the receiving, by the second device, control information sent by the first device, the method further includes:
parsing the control information; and
stopping timing when determining to reject the control information and starting timing.

In an optional implementation, the first control information further includes a fourth field and/or a fifth field, the fourth field indicates a link corresponding to the link quality, and the fifth field indicates an available channel between the first device and the second device.

According to a third aspect, an embodiment of the present invention provides a Bluetooth device, and the Bluetooth device includes a hardware module configured to perform the method in the first aspect.

According to a fourth aspect, an embodiment of the present invention provides another Bluetooth device, and the Bluetooth device includes a hardware module configured to perform the method in the second aspect.

According to a fifth aspect, an embodiment of the present invention provides a computer-readable storage medium. The computer storage medium stores a computer program. The computer program includes a program instruction, and when the program instruction is executed by a processor, the processor is enabled to perform the method in the first aspect or the second aspect.

### BRIEF DESCRIPTION OF DRAWINGS

The following briefly describes accompanying drawings that need to be used in the embodiments of this application.
FIG. 1 is a schematic diagram of a Bluetooth system structure according to an embodiment of the present invention;
FIG. 2 is a schematic diagram of a transmission rate switching procedure in Bluetooth protocol specifications;
FIG. 3 is a schematic structural diagram of control data in negotiation information;
FIG. 4 is a schematic structural diagram of control data in control information;
FIG. 5 is a schematic flowchart of a transmission rate switching method according to an embodiment of the present invention;
FIG. 6 is a schematic structural diagram of control information according to an embodiment of the present invention;
FIG. 7 is a schematic flowchart of a transmission rate switching method according to another embodiment of the present invention;
FIG. 8 is a schematic flowchart of a transmission rate switching method according to another embodiment of the present invention;
FIG. 9 is a schematic flowchart of a transmission rate switching method according to another embodiment of the present invention;
FIG. 10 is a schematic structural diagram of a Bluetooth device according to an embodiment of the present invention;
FIG. 11 is a schematic structural diagram of a Bluetooth device according to another embodiment of the present invention; and
FIG. 12 is a schematic structural block diagram of a hardware module of a Bluetooth device according to an embodiment of the present invention.

### DESCRIPTION OF EMBODIMENTS

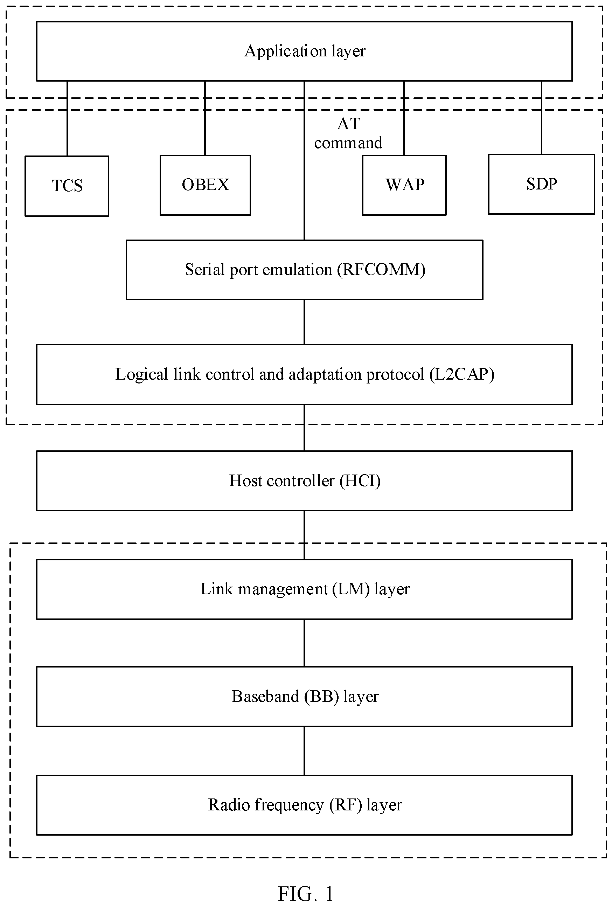

FIG. 1 is a schematic diagram of a Bluetooth system structure. The entire Bluetooth system structure may include three parts: a bottom-layer hardware module, an intermediate protocol layer, and an application layer. As shown in FIG. 1, the Bluetooth bottom-layer hardware module includes a baseband layer (Base Band, BB), a link management layer (Link Manager, LM), and a radio frequency layer (Radio Frequency, RF). The radio frequency layer is mainly responsible for radio frequency processing and baseband modulation. The baseband layer is responsible for frequency hopping, Bluetooth data transmission, and information frame transmission. The link management layer is responsible for connection establishment, disconnection, and link security and control. There are two types of links: a synchronous connection-oriented link (Synchronous Connection Oriented, SCO) and an asynchronous connection-less link (Asynchronous Connectionless Link, ACL). The synchronous connection-oriented link is mainly used for synchronous voice transmission, and the asynchronous connection-less link is mainly used for packet data transmission. An SCO connection is a symmetric connection, and a data packet is transmitted by using a reserved timeslot. After a connection is established, an SCO data packet may be sent when a primary device and a secondary device are not selected. An SCO packet can be used to transmit both voice and data. However, during data transmission, the SCO packet is used to retransmit only damaged data. The ACL link is used to directionally send a data packet. The ACL supports both symmetric and asymmetric connections (which may be a one-to-one connection or a one-to-many connection). The primary device is responsible for controlling a link bandwidth, and determining connection symmetry and a specific bandwidth that may be occupied by each secondary device in a piconet. The secondary device can transmit data only when the secondary device selected. The ACL link also supports receiving of a broadcast message sent by the primary device to all secondary devices in the piconet. Both the intermediate protocol layer and the application layer are software modules. The upper-layer software module cannot be directly connected to the bottom-layer hardware module. A message and data between two module interfaces can be transmitted only after being interpreted by using a host controller interface (Host Controller Interface, HCI). Actually, the HCI is equivalent to a bridge between software and hardware in a Bluetooth protocol. The HCI provides a unified command interface for invoking hardware such as the lower-layer baseband layer, the link management layer, and a status and control register. The Bluetooth intermediate protocol layer completes functions such as data frame decomposition and reassembly, service quality control, and group extraction, serves an upper-layer application, and provides an interface with the bottom-layer hardware module. The intermediate protocol layer includes a logical link control and adaptation protocol (Logical Link Control and Adaptation Protocol, L2CAP), a service discovery protocol (Service Discovery Protocol, SDP), a serial port emulation protocol (RFCOMM), an object exchange protocol (Object Exchange, OBEX), a wireless application protocol (Wireless Application Protocol, WAP), a telephony control protocol (Telephony Control Protocol Spectocol, TCS), and the like. An AT command set is used to control a mobile phone or a modem, and a protocol stack for transmitting other service data. The application layer is uppermost, and corresponds to various application models and applications.

The following describes protocols in the Bluetooth protocol stack in this application.

The link management protocol (Link Manager Protocol, LMP) is a data link layer protocol in the Bluetooth protocol stack, and is responsible for establishing a connection between Bluetooth devices. LMP performs identity authentication and encryption by initiating, exchanging, and verifying a connection, and determines a size of a baseband data packet through negotiation. LMP performs link setting, authentication, link configuration, and the like. A link manager discovers another remote link manager and communicates with the another remote link manager through the link management protocol (LMP).

The baseband protocol (Base Band Protocol) is above the Bluetooth radio frequency layer in the Bluetooth protocol stack. The baseband protocol and the radio frequency layer constitute a Bluetooth physical layer. Baseband and link control layers ensure a physical connection between Bluetooth devices. The baseband protocol uses query and paging processes to synchronize transmit frequencies and clocks between different devices, and provides two physical connection modes for baseband data packets: synchronous connection-oriented (SCO) and asynchronous connection-less (ACL). In addition, multichannel data can be transmitted on a same RF. The ACL is applicable to a data packet, and the SCO is applicable to voice and a combination of voice and data. Forward error correction or cyclic redundancy check, and encryption are performed on both the voice and the data packet. Moreover, a special channel is allocated for different data types (including connection management information and control information). The baseband protocol may transmit voice between Bluetooth devices in various user modes. A connection-oriented voice packet only needs to be transmitted through a baseband, and does not arrive at the L2CAP.

L2CAP is an adaptation protocol that shields the baseband protocol for an upper-layer protocol. L2CAP is above the baseband protocol and belongs to a data link layer. L2CAP provides connection-oriented and connection-less data services for an upper layer, and completes functions such as protocol multiplexing, segmentation and reassembly, service quality transmission, and group abstraction. Although the baseband protocol provides two connection types: the SCO and the ACL, L2CAP supports only the ACL.

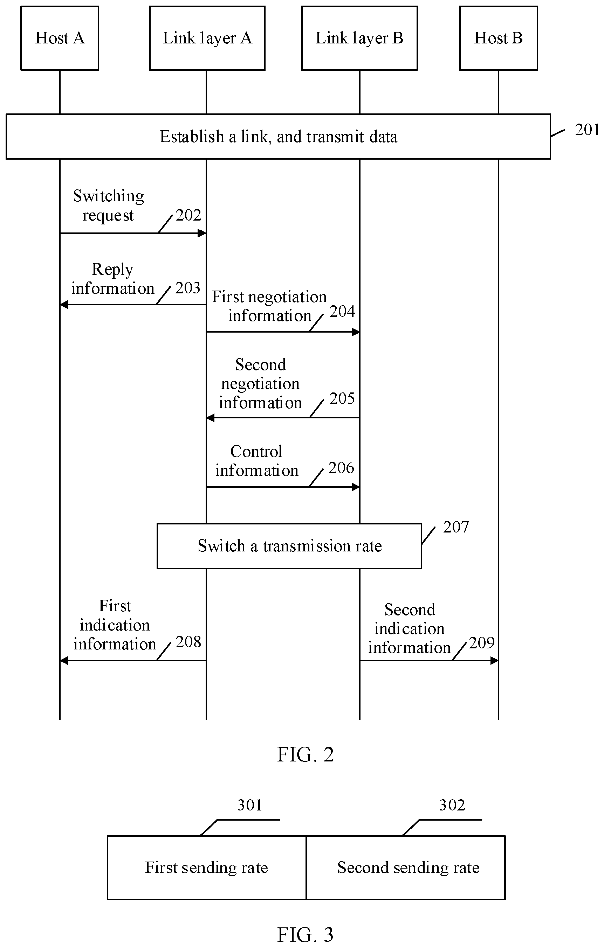

Bluetooth is an open short-distance wireless communications technology standard for implementing short-distance wireless voice and data communication. In this application, a Bluetooth device may be a mobile phone, a cordless telephone set, a notebook computer, a tablet computer, a personal digital assistant, a printer, a digital camera, a local area network device, or the like. Currently, the Bluetooth device may support a plurality of transmission rates. For example, in the Bluetooth 5.0 specification, BLE may already support three physical rates: BLE 1M, BLE 2M, and a BLE long range. In actual application, the Bluetooth device may switch a transmission rate when a network status changes. Specifically, if the network status changes in a process in which the primary device and the secondary device transmit data, in other words, if link quality changes, the primary device and the secondary device negotiate to determine new transmission rates that need to be used, and switch the transmission rates to the new transmission rates. The following describes a transmission rate switching procedure in Bluetooth protocol specifications. As shown in FIG. 2, the switching procedure includes the following steps.

201: Establish a link and transmit data.

A host A is a host of the primary device, and a host B is a host of the secondary device. A link layer A is a link layer of the primary device, and a link layer B is a link layer of the secondary device. A link connection is established and data is transmitted between the primary device and the secondary device, and the link may be an ACL link or an SCO link.

202: The host A sends a transmission rate switching request to the link layer A.

Optionally, a host controller of the primary device sends the transmission rate switching request to the link layer A. The link layer A is implemented by an upper-layer software module of the primary device. Specifically, the host A sends an LE Set PHY HCI command to the link layer A, to request the link layer (Link Layer) A to perform transmission rate switching.

203: The link layer A sends reply information to the host A.

The reply information is information fed back by the link layer A for the received transmission rate switching request. The reply information may be command status information, that is, a command status, sent for the transmission rate switching request.

204: The link layer A sends first negotiation information to the link layer B.

The first negotiation information is control information, and indicates a sending rate that is preferentially used by the primary device and that is determined by the primary device and a sending rate that is preferentially used by the secondary device and that is determined by the primary device. Specifically, the first negotiation information is LL PHY REQ.

205: The link layer B sends second negotiation information to the link layer A.

The second negotiation information is also control information, and indicates a sending rate that is preferentially used by the primary device and that is determined by the secondary device and a sending rate that is preferentially used by the secondary device and that is determined by the secondary device. Specifically, the second negotiation information is LL_PHY_RSP. Formats of control data in protocol data units (Protocol Data Unit, PDU) corresponding to the first negotiation information and the second negotiation information are the same. Specifically, FIG. 3 shows a format of control data in a PDU, where 301 is a first sending rate, which indicates the sending rate preferentially used by the primary device, and 302 is a second sending rate, which indicates the sending rate preferentially used by the secondary device.

206: The link layer A sends control information to the link layer B.

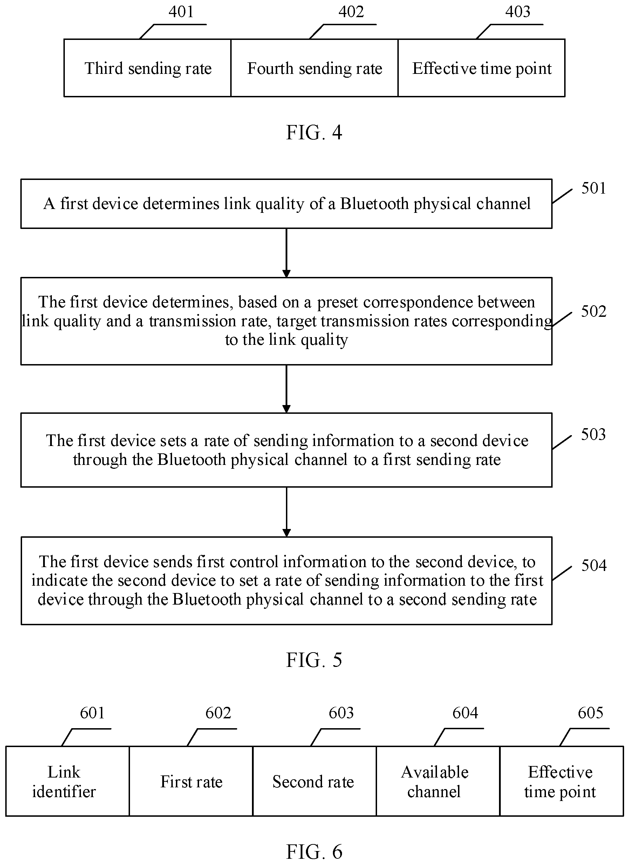

The control information indicates the secondary device to perform transmission rate switching. Specifically, the control information indicates a to-be-used sending rate of the primary device and a to-be-used sending rate of the secondary device. Specifically, the control information is LL_PHY_UPDATE_IND. FIG. 4 shows a format of control data in a PDU corresponding to the control information, where 401 is a third sending rate, which represents a PHY type sent by the primary device to the secondary device, in other words, a sending rate of the primary device; 402 is a fourth sending rate, which represents a PHY type sent by the secondary device to the primary device, in other words, a sending rate of the secondary device; and 403 indicates a transmission rate switching time point, in other words, a time point at which a new transmission rate takes effect.

207: The link layer A and the link layer B each switch a transmission rate.

Specifically, the link layer A switches the sending rate of the primary device to the sending rate indicated by the control information, and the link layer B switches the sending rate of the secondary device to the sending rate indicated by the control information. In actual application, the primary device and the secondary device each switch the transmission rate. In actual application, a baseband layer implements transmission rate switching.

208: The link layer A sends first indication information to the host A.

The first indication information indicates that transmission rate switching is completed. Specifically, the first indication information is LE PHY Update Complete.

209: The link layer B sends second indication information to the host B.

The second indication information indicates that transmission rate switching is completed. Specifically, the second indication information is LE PHY Update Complete.

The secondary device may perform a procedure in which the primary device switches a transmission rate, and the primary device may also perform a procedure in which the secondary device switches a transmission rate. In other words, the primary device and the secondary device each may actively initiate a transmission rate switching procedure. It can be learned from the foregoing transmission rate switching procedure that, before control information is sent, the primary device and the secondary device need to negotiate to determine a transmission rate that needs to be switched to. A negotiation operation between the primary device and the secondary device takes some time. Consequently, in some application scenarios, transmission quality may be deteriorated, and user experience is affected.

An embodiment of the present invention provides a transmission rate switching method. The method is applied to a first device that communicates with a second device through a Bluetooth physical channel. As shown in FIG. 5, the method includes the following steps.

501: The first device determines link quality of the Bluetooth physical channel.

There is at least one physical link between the first device and the second device. The Bluetooth physical channel may be any physical link between the first device and the second device. The Bluetooth physical channel may be an ACL link, or may be an SCO link. Optionally, the first device detects quality of a physical link between the first device and the second device, that is, the quality of the Bluetooth physical channel, to obtain the link quality. Optionally, the first device may determine the link quality of the Bluetooth physical channel based on a link quality measurement report that is reported by the second device. The link quality measurement report includes information about the link quality of the Bluetooth physical channel.

502: The first device determines, based on a preset correspondence between link quality and a transmission rate, target transmission rates corresponding to the link quality.

The target transmission rates include a first sending rate and a second sending rate. The first sending rate is a to-be-used sending rate of the first device, and the second sending rate is a to-be-used sending rate of the second device. The first device may preset the correspondence between link quality and a transmission rate. Specifically, the first device may preset a table of the correspondence between link quality and a transmission rate, and therefore the first device may search the foregoing correspondence table for a transmission rate corresponding to any link quality. Table 1 is a table of a correspondence between link quality and a transmission rate according to an embodiment of the present invention. It can be learned from Table 1 that link quality in different intervals corresponds to different transmission rates, and the transmission rate includes the to-be-used sending rate of the first device and the to-be-used sending rate of the second device. For example, if the link quality between the first device and the second device is in a second interval, the link quality corresponds to a second transmission rate, and the second transmission rate includes the to-be-used sending rate of the first device and the to-be-used sending rate of the second device.

**Table 1**

| Link quality | Transmission rate |
|---|---|
| First interval | First transmission rate |
| Second interval | Second transmission rate |
| ... | ... |
| N^{th} interval | N^{th} transmission rate |

In a process in which the first device establishes a physical link connection to the second device, or after the first device establishes a physical link connection, the first device may obtain a transmission rate that can be supported by the second device. Optionally, the first device determines, based on capability information reported by the second device, the transmission rate that can be supported by the second device. The first device may preset a transmission rate supported by the first device. Optionally, the first device determines reference transmission rates based on the transmission rates separately supported by the first device and the second device, and the reference transmission rates are transmission rates that can be used between the first device and the second device. If the first device supports the first transmission rate to the fourth transmission rate, and the second device supports the third transmission rate and the fourth transmission rate, the transmission rate that may be used between the first device and the second device is the third transmission rate and the fourth transmission rate. The first device may determine the reference transmission rates in another manner. This is not limited in this embodiment of the present invention.

The target transmission rates are transmission rates that can be supported by the link quality. Optionally, the target transmission rates are relatively large transmission rates in transmission rates that can be supported by the link quality. It can be understood that the reference transmission rates are to-be-used transmission rates for data transmission between the first device and the second device. The target transmission rates are relatively appropriate transmission rates determined by the first device from the foregoing to-be-used transmission rates based on the link quality. In actual application, the target transmission rates may be determined based on the reference transmission rates and the link quality in a plurality of manners. This is not limited in this embodiment of the present invention. For example, the first device may determine, as the target transmission rate, a largest transmission rate that can be supported by the link quality in the reference transmission rates. For another example, the first device may determine, as the target transmission rate, a transmission rate having a lowest requirement for receiving and sending performance of the secondary device in the reference transmission rates, and the link quality supports the transmission rate having a lowest requirement for receiving and sending performance of the secondary device.

In an optional implementation, that the first device determines, based on a preset correspondence between link quality and a transmission rate, target transmission rates corresponding to the link quality includes:
after determining that a variation of the link quality of the Bluetooth physical channel within reference duration exceeds a quality threshold, determining, by the first device based on the correspondence between link quality and a transmission rate, the target transmission rates corresponding to the link quality.

The reference duration is duration that is preset by the first device, for example, 100 milliseconds, 500 milliseconds, or 2 seconds. The variation of the link quality between the first device and the second device within the reference duration may be a difference between first link quality and second link quality. The first link quality and the second link quality each are quality that is of a link between the first device and the second device and that is measured by the first device at different time points, and an interval between a time point at which the first link quality is measured and a time point at which the second link quality is measured is the reference duration. For example, if an interval at which the first device measures the link quality between the first device and the second device is 3 seconds, a difference between link quality currently measured by the first device and link quality measured last time is a variation of the link quality between the first device and the second device within 3 seconds. The foregoing quality threshold may be a preset fixed value, or may be a variable related to the link quality. For example, when the quality threshold is a fixed value, if the variation of the link quality within the reference duration exceeds the fixed value, it is determined that the variation of the link quality within the reference duration exceeds the quality threshold. For another example, when the quality threshold is 20% of the link quality, if the variation of the link quality within the reference duration exceeds 20% of the link quality, it is determined that the variation of the link quality within the reference duration exceeds the quality threshold.

When the variation of the link quality within the reference duration does not exceed the quality threshold, it may be considered that the variation of the link quality does not affect transmission quality, and therefore transmission rate switching does not need to be performed. Alternatively, when the variation of the link quality within the reference duration exceeds the quality threshold, it may be considered that the variation of the link quality affects transmission quality, and therefore transmission rate switching needs to be performed to improve the transmission quality. It can be understood that, that the variation of the link quality within the reference duration exceeds the quality threshold is a condition for starting a transmission rate switching operation, and transmission rate switching needs to be performed only when the condition is met.

In this embodiment of the present invention, that the variation of the link quality within the reference duration exceeds the quality threshold is set as the condition for starting a transmission rate switching operation, so that unnecessary transmission rate switching operations and signaling overheads can be reduced, and transmission rate switching can be performed in time when the link quality changes.

503: The first device sets a rate of sending information to the second device through the Bluetooth physical channel to the first sending rate.

The first device may send control information and the data to the second device through the Bluetooth physical channel. That the first device sets a rate of sending information to the second device through the Bluetooth physical channel to the first sending rate may be: The first device switches the rate of sending information to the second device through the Bluetooth physical channel from a current sending rate to the first sending rate.

504: The first device sends first control information to the second device, to indicate the second device to set a rate of sending information to the first device through the Bluetooth physical channel to the second sending rate.

That the second device sets the rate of sending information to the first device through the Bluetooth physical channel to the second sending rate may be: The second device switches the rate of sending information to the first device through the Bluetooth physical channel from a current sending rate to the second sending rate.

In an optional implementation, the first control information includes a first field, a second field, and a third field. The first field indicates the first sending rate, the second field indicates the second sending rate, and the third field indicates a target time point. That the first device sets a rate of sending information to the second device through the Bluetooth physical channel to the first sending rate includes:
after the target time point is reached, setting, by the first device, the rate of sending information to the second device through the Bluetooth physical channel to the first sending rate.

A rate of transmission between the first device and the second device relates to a sending rate of the first device, a receiving rate of the first device, a sending rate of the second device, and a receiving rate of the second device. The sending rate of the first device corresponds to the receiving rate of the second device, and the receiving rate of the first device corresponds to the sending rate of the second device. Therefore, when the first device determines the to-be-used sending rate of the first device and the to-be-used sending rate of the second device, the first device determines a to-be-used transmission rate, that is, the target transmission rate. As shown in FIG. 4, 401 is the first field that indicates the first sending rate, 402 is the second field that indicates the second sending rate, and 403 indicates the target time point.

It can be understood that the target time point is a transmission rate switching time point. Both the first device and the second device switch transmission rates to the target transmission rates at the target time point. In this manner, a time interval between a time point at which the first device completes transmission rate switching and a time point at which the second device completes transmission rate switching is relatively short. Therefore, it can be ensured that a data receiving and sending rate of the first device is consistent with a data receiving and sending rate of the second device. That a data receiving and sending rate of the first device is consistent with a data receiving and sending rate of the second device means that the sending rate of the first device is consistent with the receiving rate of the second device, and the sending rate of the second device is consistent with the receiving rate of the first device.

In this embodiment of the present invention, the first control information is used to indicate the to-be-used sending rate of the first device, the to-be-used sending rate of the second device, and the transmission rate switching time point. Implementation is simple, and fewer control resources are consumed. Therefore, it can be ensured that the data receiving and sending rate of the first device is consistent with the data receiving and sending rate of the second device.

In this embodiment of the present invention, the target transmission rates corresponding to the link quality between the first device and the second device are determined based on the correspondence between link quality and a transmission rate, and the control information is used to indicate the second device to switch the sending rate and switch the sending rate of the first device. A switching procedure is simple and does not require negotiation, so that message sequence overheads can be reduced.

In an optional implementation, the third field includes target duration. After the first device sends the first control information to the second device, the method further includes:
starting timing after receiving acknowledgment information from the second device, where the acknowledgment information indicates that the second device receives the first control information.

That the target time point is reached includes:
duration of the timing reaches the target duration.

The acknowledgment information may be an empty data packet, or may be information including a specific identifier. Specifically, the acknowledgment information includes an acknowledgment bit for the first control information. That the third field includes target duration may be that a bit of the third field corresponds to the target duration. Optionally, the third field occupies two bytes, and the third field is a quantity of connection events. The target duration is duration corresponding to the quantity of connection events. For example, if the quantity of connection events is 9, the third field is 0000000000001001. During one connection, the primary device sends a data packet to the secondary device in each connection event. A connection event is a process in which the primary device and the secondary device send data packets to each other. The target time point is defined by counting a quantity that is indicated by the third field and that is of connection events after a current connection event. The current connection event is an event of receiving and sending of the first control information and the acknowledgment information between the first device and the second device. For example, a counter records the quantity of connection events, a count value corresponding to the current connection event is 10, and the quantity of connection events that is indicated by the third field is 6. In this case, the target time point is a time point at which the count value of the counter reaches 26, and the target duration is duration corresponding to the six connection events. The starting timing may be recording the quantity of connection events by using the counter, in other words, recording the count value corresponding to the current connection event. That duration of the timing reaches the target duration may be that a difference between a current count value of the counter and the count value corresponding to the current connection event reaches the quantity of connection events that is indicated by the third field. Optionally, a value corresponding to the third field is multiplied by a coefficient, to obtain the target duration. For example, if the third field is 0000000000001001, a corresponding value is 9, and a coefficient is 1.25 ms, the target duration is 1.25 x 9 = 11.25 ms.

In this embodiment of the present invention, a case in which the target time point is reached can be accurately determined in a manner of collecting statistics about a connection event or in a timing manner, which is simply implemented.

In an optional implementation, after the starting timing after receiving acknowledgment information from the second device, the method further includes:
stopping timing when rejection information is received before the target time point is reached, where the rejection information indicates that the second device rejects the first control information.

The first device and the second device perform transmission rate switching after the target time point is reached. That the first device and the second device perform transmission rate switching needs to meet a condition that the timing duration reaches the target duration. After timing is stopped, the timing duration cannot reach the target duration, and consequently the target time point cannot be reached. Therefore, in this manner, a transmission rate switching operation initiated by the first device may be stopped. In actual application, when the second device cannot accept, for some reasons, the first control information that indicates to perform transmission rate switching, the second device may send the rejection information, to indicate the first device to stop a current transmission rate switching operation. This can resolve a problem that the second device cannot perform transmission rate switching based on the indication of the first control information.

In this embodiment of the present invention, the first device stops timing when the first device receives the rejection information before the target time point is reached. This can resolve a problem that the second device cannot perform transmission rate switching based on control information sent by the first device.

In an optional implementation, the first control information further includes a fourth field and/or a fifth field. The fourth field indicates a link corresponding to the link quality, and the fifth field indicates an available channel between the first device and the second device.

A link identifier included in the fourth field corresponds to the link quality. The link identifier may be an identifier of a current link, or may be an identifier of another link. The current link is a link for sending the first control information. Optionally, if the fourth field is Oxffff, it indicates to switch a transmission rate of the current link. If the fourth field is another value, it indicates to switch a transmission rate of a link corresponding to the value. Specifically, the fifth field may be a code corresponding to the available channel between the first device and the second device, and a specific format and definition are the same as those defined by standard Bluetooth.

Optionally, the first control information may further include other information, for example, an encoding scheme or a modulation scheme. FIG. 6 is a schematic structural diagram of first control information according to an embodiment of the present invention. As shown in FIG. 6, 601 is a link identifier; 602 is a first rate, which represents a PHY type sent by the first device to the second device, in other words, a to-be-used sending rate of the first device; 603 is a second rate, which represents a PHY type sent by the second device to the first device, in other words, a to-be-used sending rate of the second device; 604 represents an available channel; and 605 represents a transmission rate switching time point, that is, a time point at which a new transmission rate takes effect. The link identifier is an identifier of a link whose transmission rate needs to be switched.

In this embodiment of the present invention, the first control information may further include the link identifier and the available channel between the first device and the second device. This can resolve a problem that only a transmission rate of a current link can be switched in a prior-art solution. In addition, more information can be provided for transmission rate switching.

In an optional implementation, the first device is a primary device, and the second device is a secondary device. The method further includes:
receiving second control information sent by the second device, where the second control information indicates the first device to switch a sending rate; and
rejecting the second control information when a time interval between a first time point and a second time point is less than a time threshold, where the first time point is a time point at which the first device sends the first control information, and the second time point is a time point at which the first device receives the second control information.

In this application, both the primary device and the secondary device can send control information. When a time interval between a time point at which the primary device sends the control information and a time point at which the secondary device sends the control information is less than the time threshold, the primary device rejects the control information sent by the secondary device, and the control information sent by the primary device is executed. In this manner, the primary device and the secondary device can be prevented from performing two different transmission rate switching operations within a same time period.

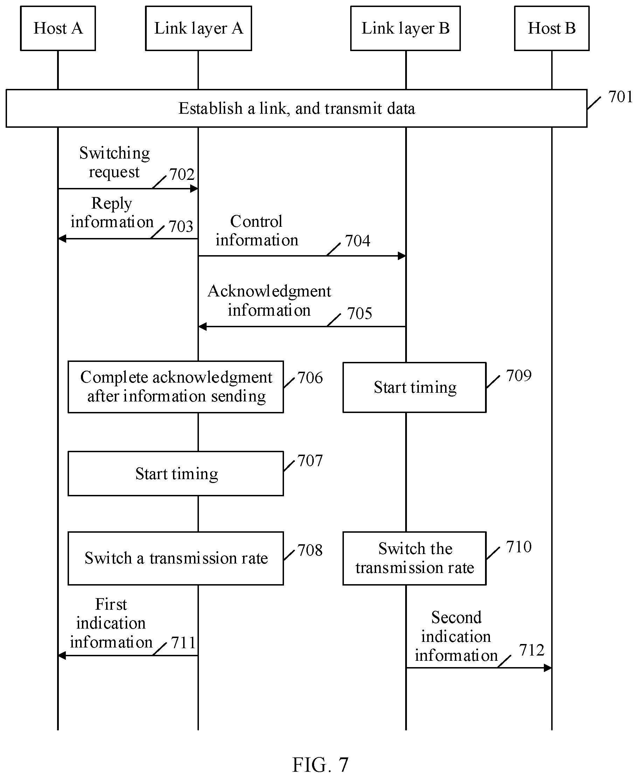

An embodiment of the present invention provides another transmission rate switching method. As shown in FIG. 7, the method includes the following steps.

701: A first device and a second device establish a link, and transmit data to each other.

The link may be an ACL link, or may be an SCO link. Optionally, the first device and the second device establish an acoustic connection.

702: A host of the first device sends a transmission rate switching request to a first link layer.

Optionally, a host controller of the first device sends the transmission rate switching request to the first link layer. The first link layer is a link layer of the first device, and is implemented by a software module of the first device. Specifically, the transmission rate switching request may be an LE Set PHY HCI command. Optionally, after determining that a variation of link quality exceeds a quality threshold, the host of the first device sends the transmission rate switching request to the first link layer.

703: The first link layer sends reply information to the host of the first device.

The reply information is information fed back by the first link layer for the received transmission rate switching request. The reply information may be command status information, that is, a command status, sent for the transmission rate switching request.

704: The first link layer sends control information to a second link layer.

The control information indicates the second device to perform transmission rate switching. The second link layer is a link layer of the second device, and is implemented by a software module of the second device. Specifically, the control information indicates a to-be-used sending rate of the first device and a to-be-used sending rate of the second device. Optionally, the control information is LL PHY UPDATE IND FIG. 6 shows a format of control data in a PDU corresponding to the control information.

705: The second link layer sends acknowledgment information to the first link layer.

The acknowledgment information may be an empty data packet, or may be information including a specific identifier. Specifically, the acknowledgment information includes an acknowledgment bit for the control information.

706: The first link layer acknowledges that the second device receives the control information.

707: The first link layer starts timing.

708: The first link layer performs transmission data switching after a transmission rate switching time point indicated by the control information arrives.

Specifically, the first link layer switches a sending rate of the first device to the sending rate indicated by the control information.

709: The second link layer starts timing after sending the acknowledgment information.

710: The second link layer performs transmission data switching after a transmission rate switching time point indicated by the control information arrives.

Specifically, the second link layer switches a sending rate of the second device to the sending rate indicated by the control information.

711: The first link layer sends first indication information to the host of the first device.

The first indication information indicates that transmission rate switching is completed.

712: The second link layer sends second indication information to a host of the second device.

The second indication information indicates that transmission rate switching is completed.

By comparing the transmission rate switching procedures in FIG. 7 and FIG. 2, it can be learned that a process of negotiation between two Bluetooth devices is saved in the transmission rate switching procedure provided in this embodiment of the present invention, so that transmission rate switching can be completed more quickly. In this embodiment of the present invention, the first device may be a primary device, or may be a secondary device. In other words, the primary device and the secondary device each may actively initiate a transmission rate switching procedure.

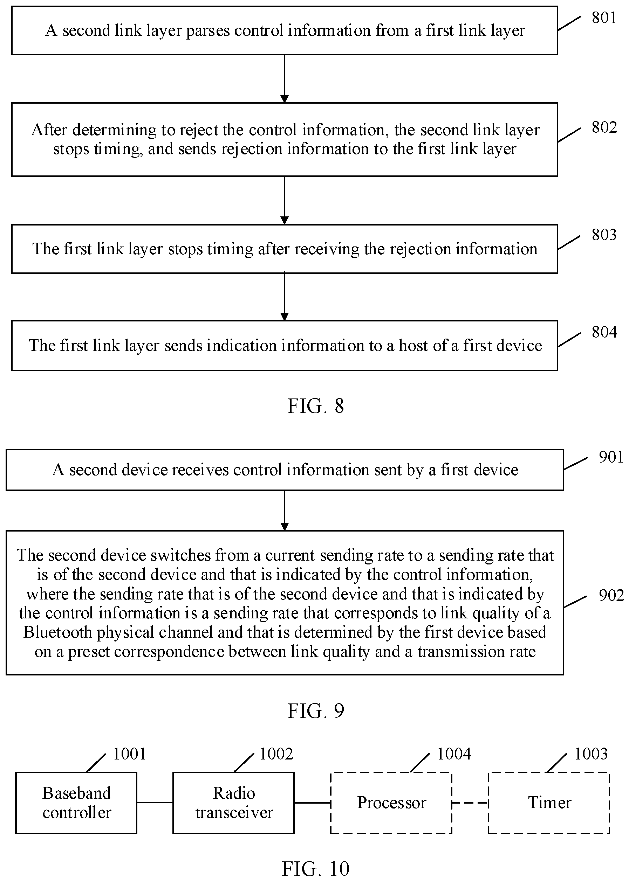

An embodiment of the present invention provides another transmission rate switching method. As shown in FIG. 8, the method includes the following steps.

801: A second link layer parses control information from a first link layer.

Step 701 to step 707 in FIG. 7 may be performed before step 801.

802: After determining to reject the control information, the second link layer stops timing, and sends rejection information to the first link layer.

803: The first link layer stops timing after receiving the rejection information.

804: The first link layer sends indication information to the host of the first device.

The indication information indicates that a current transmission rate switching operation has been stopped.

In this embodiment of the present invention, the second device may reject the control information sent by the first device. This can resolve a problem that the second device cannot perform transmission rate switching based on the control information sent by the first device.

An embodiment of the present invention provides another transmission rate switching method. The method is applied to a second device that communicates with a first device through a Bluetooth physical channel. As shown in FIG. 9, the method includes the following steps.

901: The second device receives control information sent by the first device.

Both the first device and the second device are Bluetooth devices. Either of the first device and the second device is a primary device, and the other is a secondary device. The first device may be a secondary device, or may be a primary device. The second device may switch a transmission rate based on the control information sent by the first device.

902: The second device switches from a current sending rate to a sending rate that is of the second device and that is indicated by the control information. The sending rate that is of the second device and that is indicated by the control information is a sending rate that corresponds to link quality of the Bluetooth physical channel and that is determined by the first device based on a preset correspondence between link quality and a transmission rate.

It can be understood that the transmission rate of the second device may be quickly switched based on the link quality, and quality of transmission between the first device and the second device is ensured.

In this embodiment of the present invention, the second device may complete transmission rate switching without negotiating with the first device. Therefore, switching efficiency is higher.

In an optional implementation, after the second device receives the control information sent by the first device, the method further includes:
sending rejection information to the first device when determining to reject the control information, where the rejection information indicates that the second device rejects the control information.

Optionally, when at least one of sending rates and receiving rates of the second device that can be supported by the link quality is greater than a requirement of the target transmission rate, or when at least one of sending rates and receiving rates of the second device that can be supported by the link quality cannot meet a requirement of the target transmission rate, the second device determines to reject the control information. It can be understood that, if receiving and sending performance of the second device cannot be fully used when the second device switches the transmission rate to the target transmission rate, the second device determines to reject the control information. If the second device cannot reach a receiving rate or a sending rate required by the target transmission rate, the second device determines to reject the control information. In this way, quality of transmission between the first device and the second device can be ensured, and the receiving and sending performance of the second device can be fully used.

In this embodiment of the present invention, the second device may send the rejection information to the first device, so that the first device re-determines a transmission rate that can be supported by the second device.

In an optional implementation, after the second device receives the control information sent by the first device, the method further includes:
sending acknowledgment information to the first device, where the acknowledgment information indicates that the second device receives the control information.

In this embodiment of the present invention, the acknowledgment information is sent to the first device to indicate that the second device receives the control information, so that the first device performs a timing operation in time.

In an optional implementation, the target transmission rates include a sending rate of the first device and a sending rate of the second device. The control information includes a first field, a second field, and a third field. The first field indicates a to-be-used sending rate of the first device, the second field indicates a to-be-used sending rate of the second device, and the third field indicates a target time point.

That the second device switches from a current sending rate to a sending rate that is of the second device and that is indicated by the control information includes:
after the target time point is reached, switching, by the second device, from the current sending rate to the sending rate indicated by the second field.

In this embodiment of the present invention, the control information is used to indicate the sending rate of the first device, the sending rate of the second device, and a transmission rate switching time point. Implementation is simple, and fewer control resources are consumed. Therefore, it can be ensured that a data receiving and sending rate of the first device is consistent with a data receiving and sending rate of the second device.

In an optional implementation, the third field includes target duration. After the sending acknowledgment information to the first device, the method further includes:
starting timing.

That the target time point is reached includes:
duration of the timing reaches the target duration.

That the third field includes target duration may be that a bit of the third field corresponds to the target duration. Optionally, the third field occupies two bytes, and the third field is a quantity of connection events. The target duration is duration corresponding to the quantity of connection events. The starting timing may be recording the quantity of connection events by using a counter, in other words, recording a count value corresponding to a current connection event. That duration of the timing reaches the target duration may be that a difference between a current count value of the counter and the count value corresponding to the current connection event reaches the quantity of connection events that is indicated by the third field. Optionally, a value corresponding to the third field is multiplied by a coefficient, to obtain the target duration.

In this embodiment of the present invention, it can be accurately determined, in a manner of collecting statistics about a connection event or in a timing manner, that the target time point is reached, which is simply implemented.

In an optional implementation, after the second device receives the control information sent by the first device, the method further includes:
parsing the control information; and
stopping timing when determining to reject the control information and starting timing.

It can be understood that, if receiving and sending performance of the second device cannot be fully used when the second device switches the transmission rate to the target transmission rate, the second device determines to reject the control information. Alternatively, if the second device cannot reach a receiving rate or a sending rate required by the target transmission rate, the second device determines to reject the control information. In this way, quality of transmission between the first device and the second device can be ensured, and the receiving and sending performance of the second device can be fully used. Rejecting the control information means that the second device does not switch the sending rate based on the control information.

In this embodiment of the present invention, the second device may reject, in time, a transmission rate switching operation initiated by the first device, which is simply implemented.

In an optional implementation, the first control information further includes a fourth field and/or a fifth field. The fourth field indicates a link corresponding to the link quality, and the fifth field indicates an available channel between the first device and the second device.

An embodiment of the present invention provides a Bluetooth device. As shown in FIG. 10, the Bluetooth device is a first device that communicates with a second device through a Bluetooth physical channel, and the Bluetooth device includes a baseband controller 1001 and a radio transceiver 1002.

The baseband controller 1001 is configured to determine link quality of the Bluetooth physical channel.

The baseband controller 1001 is further configured to determine, based on a preset correspondence between link quality and a transmission rate, target transmission rates corresponding to the link quality, where the target transmission rates include a first sending rate and a second sending rate.

The radio transceiver 1002 is configured to set a rate of sending information to the second device through the Bluetooth physical channel to the first sending rate.

The radio transceiver 1002 is further configured to send first control information to the second device, to indicate the second device to set a rate of sending information to the first device through the Bluetooth physical channel to the second sending rate.

A specific implementation method is the same as the method in FIG. 5, and details are not described herein again. The baseband controller is configured to implement a function of a link management layer.

In this application, the target transmission rates corresponding to the link quality between the first device and the second device are determined based on the correspondence between link quality and a transmission rate, and the control information is used to indicate the second device to switch the sending rate and switch the sending rate of the first device. A switching procedure is simple, so that message sequence overheads can be reduced.

In an optional implementation, the baseband controller 1001 is specifically configured to: after it is determined that a variation of the link quality of the Bluetooth physical channel within reference duration exceeds a quality threshold, determine, based on the preset correspondence between link quality and a transmission rate, the target transmission rates corresponding to the link quality.

In this embodiment of the present invention, that the variation of the link quality within the reference duration exceeds the quality threshold is set as a condition for starting a transmission rate switching operation, so that unnecessary transmission rate switching operations and signaling overheads can be reduced, and transmission rate switching can be performed in time when the link quality changes.

In an optional implementation, the first control information includes a first field, a second field, and a third field, the first field indicates the sending rate of the first device, the second field indicates the sending rate of the second device, and the third field indicates a target time point.

The radio transceiver 1002 is specifically configured to switch from a current sending rate to the first sending rate after the target time point is reached.

In this embodiment of the present invention, the first control information is used to indicate a to-be-used sending rate of the first device, a to-be-used sending rate of the second device, and a transmission rate switching time point. Implementation is simple, and fewer control resources are consumed. Therefore, it can be ensured that a data receiving and sending rate of the first device is consistent with a data receiving and sending rate of the second device.

In an optional implementation, the third field includes target duration. The radio transceiver 1002 is further configured to receive acknowledgment information from the second device, where the acknowledgment information indicates that the second device receives the first control information. The Bluetooth device further includes:
a timer 1003, configured to start timing after the radio transceiver receives the acknowledgment information; and
a processor 1004, further configured to determine that timing duration of the timer reaches the target duration.

The processor 1004 may control the radio transceiver to perform sending rate switching.

In this embodiment of the present invention, a case in which the target time point is reached can be accurately determined in a manner of collecting statistics about a connection event or in a timing manner, which is simply implemented.

In an optional implementation, the radio transceiver 1002 is further configured to receive rejection information, where the rejection information indicates that the second device rejects the first control information.

The processor 1004 is further configured to: when it is determined that the radio transceiver receives the rejection information before the target time point, control the timer to stop timing.

In this embodiment of the present invention, the first device stops timing when receiving the rejection information before the target time point is reached. This can resolve a problem that the second device cannot perform transmission rate switching based on control information sent by the first device.

In an optional implementation, the first control information further includes a fourth field and/or a fifth field, the fourth field indicates a link corresponding to the link quality, and the fifth field indicates an available channel between the first device and the second device.

In this embodiment of the present invention, the first control information may further include a link identifier and the available channel between the first device and the second device. This can resolve a problem that only a transmission rate of a current link can be switched in a prior-art solution. In addition, more information can be provided for transmission rate switching.

In an optional implementation, the first device is a primary device, and the second device is a secondary device. The Bluetooth device further includes:
The radio transceiver 1002 is further configured to receive second control information sent by the second device, where the second control information indicates the first device to switch a sending rate.

The processor 1004 is further configured to reject the second control information when a time interval between a first time point and a second time point is less than a time threshold, where the first time point is a time point at which the first device sends the first control information, and the second time point is a time point at which the first device receives the second control information.

In this application, both the primary device and the secondary device can send control information. When a time interval between a time point at which the primary device sends the control information and a time point at which the secondary device sends the control information is less than the time threshold, the primary device rejects the control information sent by the secondary device, and the control information sent by the primary device is executed. In this manner, the primary device and the secondary device can be prevented from performing two different transmission rate switching operations within a same time period.

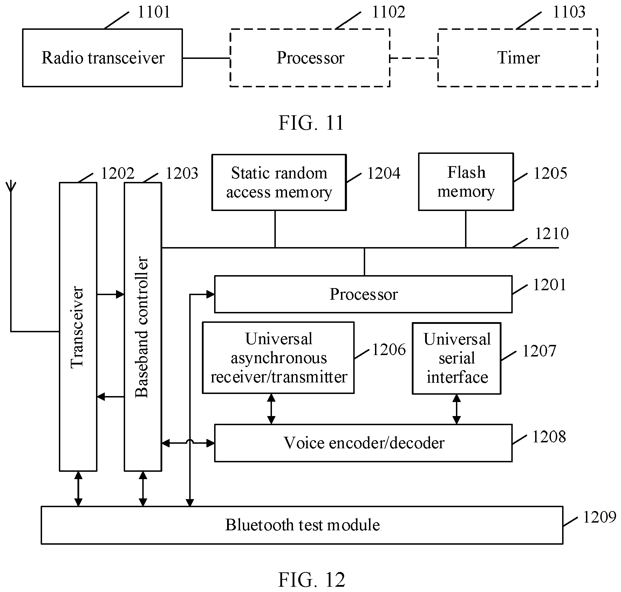

An embodiment of the present invention provides another Bluetooth device. As shown in FIG. 11, the Bluetooth device is a second device that communicates with a first device through a Bluetooth physical channel, and the Bluetooth device includes:
a radio transceiver 1101, configured to receive control information sent by the first device.

The radio transceiver 1101 is further configured to switch from a current sending rate to a sending rate that is of the second device and that is indicated by the control information, where the sending rate that is of the second device and that is indicated by the control information is a sending rate that corresponds to link quality of the Bluetooth physical channel and that is determined by the first device based on a preset correspondence between link quality and a transmission rate.

A specific implementation method is the same as the method in FIG. 9, and details are not described herein again.

In this embodiment of the present invention, the second device may complete transmission rate switching without negotiating with the first device. Therefore, switching efficiency is higher.

In an optional implementation, the Bluetooth device further includes:
a processor, configured to determine a case in which the control information is rejected.

The radio transceiver 1101 is further configured to send rejection information to the first device, where the rejection information indicates that the second device rejects the control information.

In this embodiment of the present invention, the second device may send the rejection information to the first device, so that the first device re-determines a transmission rate that can be supported by the second device.

In an optional implementation, the radio transceiver 1101 is further configured to send acknowledgment information to the first device, where the acknowledgment information indicates that the second device receives the control information.

In this embodiment of the present invention, the acknowledgment information is sent to the first device to indicate that the second device receives the control information, so that the first device performs a timing operation in time.

In an optional implementation, the control information includes a first field, a second field, and a third field, the first field indicates a to-be-used sending rate of the first device, the second field indicates a to-be-used sending rate of the second device, and the third field indicates a target time point.

The radio transceiver 1101 is specifically configured to: after the target time point is reached, switch from the current sending rate to the sending rate indicated by the second field.

In this embodiment of the present invention, the control information is used to indicate the sending rate of the first device, the sending rate of the second device, and a transmission rate switching time point. Implementation is simple, and fewer control resources are consumed. Therefore, it can be ensured that a data receiving and sending rate of the first device is consistent with a data receiving and sending rate of the second device.

In an optional implementation, the third field includes target duration, and the Bluetooth device further includes:
a timer 1103, configured to start timing after the radio transceiver sends the acknowledgment information.

The processor 1102 is further configured to determine that timing duration of the timer reaches the target duration.

In this embodiment of the present invention, it can be accurately determined, in a manner of collecting statistics about a connection event or in a timing manner, that the target time point is reached, which is simply implemented.

In an optional implementation, the processor 1102 is further configured to parse the control information.

The processor 1102 is further configured to: when the processor determines to reject the control information and the timer starts timing, control the timer to stop timing.

In this embodiment of the present invention, the second device may reject, in time, a transmission rate switching operation initiated by the first device, which is simply implemented.

In an optional implementation, the control information further includes a fourth field and/or a fifth field, the fourth field indicates a link corresponding to the link quality, and the fifth field indicates an available channel between the first device and the second device.

In addition to a protocol part, Bluetooth technical specifications further include a Bluetooth application part (that is, an application model). Bluetooth is usually implemented in terms of two parts of Bluetooth: a software implementation part and a hardware implementation part. The software implementation part is located above an HCI, and includes an L2CAP, an RFCOMM, an SDP, a TCS, and some Bluetooth applications that are at an upper layer of a Bluetooth protocol stack. The hardware implementation part is located below the HCI, that is, the bottom-layer hardware module mentioned above, which is marked in FIG. 1. The following describes a structure and performance of a Bluetooth hardware module.

FIG. 12 is a schematic structural block diagram of a hardware module of a Bluetooth device according to an embodiment of the present invention. The Bluetooth hardware module includes a radio transceiver (RF), a baseband controller (BB), and a link management layer of a Bluetooth protocol stack. Currently, most manufacturers integrate the three layers of function modules into one chip by using a system-on-a-chip (System-On-Chip, SOC) technology. As shown in FIG. 12, the Bluetooth device includes a processor 1201, a radio transceiver (RF) 1202, a baseband controller (BB) 1203, a static random access memory (SRAM) 1204, a flash memory (Flash program memory) 1205, a universal asynchronous receiver/transmitter 1206, a universal serial interface 1207, a voice encoder/decoder 1208, a Bluetooth test module 1209, and a data bus 1210. The following describes components and functions of all parts.

The radio transceiver 1202 is a core of the Bluetooth device. Any Bluetooth device needs to have a radio transceiver. The radio transceiver differs from a common radio transceiver for broadcasting in a small size and low power. The radio transceiver includes a phase-locked loop, a sending module, a receiving module, and the like. A sending part includes a frequency multiplier, and is directly modulated by using a voltage-controlled oscillator. A receiving part includes a frequency mixer, an intermediate frequency amplifier, a frequency discriminator, a low noise amplifier, and the like. The radio transceiver is mainly configured to perform modulation/demodulation, frame timing recovery, frequency hopping, and sending and receiving operations. The sending operations include carrier generation, carrier modulation, power control, and automatic gain control AGC. The receiving operations include an operation of tuning a frequency to a correct carrier frequency, signal strength control, and the like.

The baseband controller 1203 is a key module of the Bluetooth hardware module. The baseband controller 1203 includes a link control sequence generator, a programmable sequence generator, an internal voice processor, a shared RAM arbitrator, a timing chain management function unit, an encryption/decryption processing function unit, and the like. The baseband controller 1203 is mainly configured to: implement real-time processing on a Bluetooth baseband part under the control of a microprocessor module, where the real-time processing includes recovering symbol timing extraction of a received bit stream; perform cyclic redundancy check on a packet header and a payload; perform forward error correction code processing and sending processing on a packet header and a payload; perform encryption processing and decryption processing; and the like. In addition, interfaces from the baseband controller to other chips (such as a data path RAM client interface, a microprocessor interface, and a pulse code modulation interface) can be provided. The baseband controller 1203 may further determine link quality of a Bluetooth physical channel and adjust an information sending rate of the Bluetooth device.

The processor 1201 is responsible for all bit-level processing required for Bluetooth bit stream modulation and demodulation, and is further responsible for controlling a transceiver and a dedicated language encoding and decoder.

The voice encoder/decoder includes a digital-to-analog converter, an analog-to-digital conversion interface, a digital interface, an encoding module, and the like. The voice encoder/decoder 1208 is mainly configured to: provide a voice encoding and decoding function; and provide two encoding schemes: continuous variable slope delta modulation and pulse code modulation.

The Bluetooth test module 1209 includes a tested module, a test device, and a metering device. Generally, the test device and the tested device constitute a piconet. The test device is a primary node, and the tested module is a secondary node. The test device controls an entire test process. The Bluetooth test module 1209 is mainly configured to: provide authentication and consistency specifications for a radio layer and a baseband layer; and manage production and post-sales tests of a product.

The universal asynchronous receiver/transmitter 1206 and the universal serial interface 1207 each are configured to provide a physical connection from the HCI to a transport layer, which is a channel for communication between a higher layer and a physical module.

It should be further understood that, in this embodiment of the present invention, the processor 1201 may be a central processing unit (Central Processing Unit, CPU). The processor may alternatively be another general purpose processor, a digital signal processor (Digital Signal Processor, DSP), an application-specific integrated circuit (Application Specific Integrated Circuit, ASIC), a field-programmable gate array (Field-Programmable Gate Array, FPGA) or another programmable logic device, a discrete gate or transistor logic device, a discrete hardware component, or the like. The general purpose processor may be a microprocessor, any conventional processor, or the like.

Another embodiment of the present invention provides a computer-readable storage medium. The computer-readable storage medium stores a computer program. The computer program includes a program instruction, and when the program instruction is executed by a processor, implementation is as follows: A first device determines link quality of a Bluetooth physical channel; communicates with a second device through the Bluetooth physical channel; determines, based on a preset correspondence between link quality and a transmission rate, target transmission rates corresponding to the link quality, where the target transmission rates include a first sending rate and a second sending rate; sets a rate of sending information to the second device through the Bluetooth physical channel to the first sending rate; and sends first control information to the second device, to indicate the second device to set a rate of sending information to the first device through the Bluetooth physical channel to the second sending rate.

Another embodiment of the present invention provides another computer-readable storage medium. The computer-readable storage medium stores a computer program. The computer program includes a program instruction, and when the program instruction is executed by a processor, implementation is as follows: A second device receives control information sent by a first device, where the second device is a second device that communicates with the first device through a Bluetooth physical channel; and switches from a current sending rate to a sending rate that is of the second device and that is indicated by the control information, where the sending rate that is of the second device and that is indicated by the control information is a sending rate that corresponds to link quality of the Bluetooth physical channel and that is determined by the first device based on a preset correspondence between link quality and a transmission rate.

The computer-readable storage medium may be an internal storage unit of the Bluetooth device in any one of the foregoing embodiments, for example, a hard disk or a memory of the Bluetooth device. The computer-readable storage medium may alternatively be an external storage device of the Bluetooth device, for example, a plug-connected hard disk, a smart media card (Smart Media Card, SMC), a secure digital (Secure Digital, SD) card, or a flash card (Flash Card) that is disposed on the Bluetooth device. Further, the computer-readable storage medium may alternatively include both an internal storage unit and an external storage device of the Bluetooth device. The computer-readable storage medium is configured to store the foregoing computer program and other programs and data required by the Bluetooth device. The computer-readable storage medium may be further configured to temporarily store data that has been output or is to be output.

The foregoing descriptions are merely specific implementations of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A transmission rate switching method, wherein the method is applied to a first device that communicates with a second device through a Bluetooth physical channel, and the method comprises:
determining, by the first device, link quality of the Bluetooth physical channel;
determining, by the first device based on a preset correspondence between link quality and a transmission rate, target transmission rates corresponding to the link quality, wherein the target transmission rates comprise a first sending rate and a second sending rate;
setting, by the first device, a rate of sending information to the second device through the Bluetooth physical channel to the first sending rate; and
sending, by the first device, first control information to the second device, to indicate the second device to set a rate of sending information to the first device through the Bluetooth physical channel to the second sending rate.

2. The transmission rate switching method according to claim 1, wherein the determining, by the first device based on a preset correspondence between link quality and a transmission rate, target transmission rates corresponding to the link quality comprises:
after determining that a variation of the link quality of the Bluetooth physical channel within reference duration exceeds a quality threshold, determining, by the first device based on the correspondence between link quality and a transmission rate, the target transmission rates corresponding to the link quality.

3. The transmission rate switching method according to claim 1, wherein the first control information comprises a first field, a second field, and a third field, the first field indicates the first sending rate, the second field indicates the second sending rate, the third field indicates a target time point, and the setting, by the first device, a rate of sending information to the second device through the Bluetooth physical channel to the first sending rate comprises:
after the target time point is reached, setting, by the first device, the rate of sending information to the second device through the Bluetooth physical channel to the first sending rate.

4. The transmission rate switching method according to claim 3, wherein the third field comprises target duration, and after the sending, by the first device, first control information to the second device, the method further comprises:
starting timing after receiving acknowledgment information from the second device, wherein the acknowledgment information indicates that the second device receives the first control information; and
that the target time point is reached comprises:
duration of the timing reaches the target duration.

5. The transmission rate switching method according to claim 4, wherein after the starting timing after receiving acknowledgment information from the second device, the method further comprises:
stopping timing when rejection information is received before the target time point is reached, wherein the rejection information indicates that the second device rejects the first control information.

6. The transmission rate switching method according to any one of claims 3 to 5, wherein the first control information further comprises a fourth field and/or a fifth field, the fourth field indicates a link corresponding to the link quality, and the fifth field indicates an available channel between the first device and the second device.

7. The transmission rate switching method according to any one of claims 1 to 5, wherein the first device is a primary device, the second device is a secondary device, and the method further comprises:
receiving second control information sent by the second device, wherein the second control information indicates the first device to switch a sending rate; and
rejecting the second control information when a time interval between a first time point and a second time point is less than a time threshold, wherein the first time point is a time point at which the first device sends the first control information, and the second time point is a time point at which the first device receives the second control information.

8. A transmission rate switching method, wherein the method is applied to a second device that communicates with a first device through a Bluetooth physical channel, and the method comprises:
receiving, by the second device, control information sent by the first device; and
switching, by the second device, from a current sending rate to a sending rate that is of the second device and that is indicated by the control information, wherein the sending rate that is of the second device and that is indicated by the control information is a sending rate that corresponds to link quality of the Bluetooth physical channel and that is determined by the first device based on a preset correspondence between link quality and a transmission rate.

9. The transmission rate switching method according to claim 8, wherein after the receiving, by the second device, control information sent by the first device, the method further comprises:
sending rejection information to the first device when determining to reject the control information, wherein the rejection information indicates that the second device rejects the control information.

10. The transmission rate switching method according to claim 9, wherein after the receiving, by the second device, control information sent by the first device, the method further comprises:
sending acknowledgment information to the first device, wherein the acknowledgment information indicates that the second device receives the control information.

11. The transmission rate switching method according to claim 10, wherein the control information comprises a first field, a second field, and a third field, the first field indicates a to-be-used sending rate of the first device, the second field indicates a to-be-used sending rate of the second device, and the third field indicates a target time point; and
the switching, by the second device, from a current sending rate to a sending rate that is of the second device and that is indicated by the control information comprises:
after the target time point is reached, switching, by the second device, from the current sending rate to the sending rate indicated by the second field.

12. The transmission rate switching method according to claim 11, wherein the third field comprises target duration, and after the sending acknowledgment information to the first device, the method further comprises:
starting timing, wherein
that the target time point is reached comprises:
duration of the timing reaches the target duration.

13. The transmission rate switching method according to claim 12, wherein after the receiving, by the second device, control information sent by the first device, the method further comprises:
parsing the control information; and
stopping timing when determining to reject the control information and starting timing.

14. A Bluetooth device, wherein the Bluetooth device is a first device that communicates with a second device through a Bluetooth physical channel, and comprises a baseband controller and a radio transceiver, wherein
the baseband controller is configured to determine link quality of the Bluetooth physical channel;
the baseband controller is further configured to determine, based on a preset correspondence between link quality and a transmission rate, target transmission rates corresponding to the link quality, wherein the target transmission rates comprise a first sending rate and a second sending rate;
the radio transceiver is configured to set a rate of sending information to the second device through the Bluetooth physical channel to the first sending rate; and
the radio transceiver is further configured to send first control information to the second device, to indicate the second device to set a rate of sending information to the first device through the Bluetooth physical channel to the second sending rate.

15. The Bluetooth device according to claim 14, wherein the baseband controller is specifically configured to: after determining that a variation of the link quality of the Bluetooth physical channel within reference duration exceeds a quality threshold, determine, based on the preset correspondence between link quality and a transmission rate, the target transmission rates corresponding to the link quality.

16. The Bluetooth device according to claim 14, wherein the first control information comprises a first field, a second field, and a third field, the first field indicates the first sending rate, the second field indicates the second sending rate, and the third field indicates a target time point; and
the radio transceiver is specifically configured to switch from a current sending rate to the first sending rate after the target time point is reached.

17. The Bluetooth device according to claim 16, wherein the third field comprises target duration; and
the radio transceiver is further configured to receive acknowledgment information from the second device, wherein the acknowledgment information indicates that the second device receives the first control information; and the Bluetooth device further comprises:
a timer, configured to start timing after the radio transceiver receives the acknowledgment information; and
a processor, configured to determine that timing duration of the timer reaches the target duration.

18. The Bluetooth device according to claim 17, wherein the radio transceiver is further configured to receive rejection information, wherein the rejection information indicates that the second device rejects the first control information; and
the processor is further configured to: when it is determined that the radio transceiver receives the rejection information before the target time point, control the timer to stop timing.

19. The Bluetooth device according to any one of claims 16 to 18, wherein the first control information further comprises a fourth field and/or a fifth field, the fourth field indicates a link corresponding to the link quality, and the fifth field indicates an available channel between the first device and the second device.

20. The Bluetooth device according to any one of claims 14 to 18, wherein the first device is a primary device, and the second device is a secondary device;
the radio transceiver is further configured to receive second control information sent by the second device, wherein the second control information indicates the first device to switch a sending rate; and
the processor is further configured to reject the second control information when a time interval between a first time point and a second time point is less than a time threshold, wherein the first time point is a time point at which the first device sends the first control information, and the second time point is a time point at which the first device receives the second control information.

21. A Bluetooth device, wherein the Bluetooth device is a second device that communicates with a first device through a Bluetooth physical channel, and comprises:
a radio transceiver, configured to receive control information sent by the first device, wherein
the radio transceiver is further configured to switch from a current sending rate to a sending rate that is of the second device and that is indicated by the control information, wherein the sending rate that is of the second device and that is indicated by the control information is a sending rate that corresponds to link quality of the Bluetooth physical channel and that is determined by the first device based on a preset correspondence between link quality and a transmission rate.

22. The Bluetooth device according to claim 21, wherein the Bluetooth device further comprises:
a processor, configured to determine a case in which the control information is rejected, wherein
the radio transceiver is further configured to send rejection information to the first device, wherein the rejection information indicates that the second device rejects the control information.

23. The Bluetooth device according to claim 22, wherein the radio transceiver is further configured to send acknowledgment information to the first device, wherein the acknowledgment information indicates that the second device receives the control information.

24. The Bluetooth device according to claim 23, wherein the control information comprises a first field, a second field, and a third field, the first field indicates a to-be-used sending rate of the first device, the second field indicates a to-be-used sending rate of the second device, and the third field indicates a target time point; and
the radio transceiver is specifically configured to: after the target time point is reached, switch from the current sending rate to the sending rate indicated by the second field.

25. The Bluetooth device according to claim 24, wherein the third field comprises target duration, and the Bluetooth device further comprises:
a timer, configured to start timing after the radio transceiver sends the acknowledgment information, wherein
the processor is further configured to determine that timing duration of the timer reaches the target duration.

26. The Bluetooth device according to claim 25, wherein the processor is further configured to parse the control information; and
the processor is further configured to: when the processor determines to reject the control information and the timer starts timing, control the timer to stop timing.
